# EUROPEAN PATENT APPLICATION

(11) **EP 2 061 240 A2**
(43) Date of publication of application: **20.05.2009**
(21) Application number: 08015841.3
(22) Date of filing: 09.09.2008
(51) Int. Cl.: H04N 5/907, H04N 9/82

(54) **Video recorder, video player and method for managing video material**

(30) Priority: 15.11.2007 JP 2007297025
(71) Applicant: Kabushiki Kaisha Toshiba, Minato-ku, Tokyo 105-8001 (JP)
(72) Inventor: Mori, Toshiki, Tokyo (JP); Osaki, Yoshiro, Tokyo (JP); Satoh, Naoko, Tokyo (JP); Yamaguchi, Kiyoshi, Tokyo (JP); Ushio, Yasuyuki, Tokyo (JP)
(74) Representative: HOFFMANN EITLE

(57) **Abstract**

A video recorder which can maintain compatibility with a video recorder which uses magnetic tape as a recording medium and manage recorded videos easily is provided. The video recorder has a random access recording medium, a video management part, a control part and a video playback part. The video management part records information showing a group, and information showing record order of the video material in the specified group in the recording medium as the management information. A control part records the video data in the recording medium, reads out the management information from the recording medium, and read out the video data in the record order according to the information showing the record order. And the video playback part plays back the video data read out from the recording medium.

## Description

### CROSS REFERENCE TO RELATED APPLICATION

This application is based upon and claims the benefit of priority from the prior Japanese Patent Application No. 2007-297025, filed on November 15, 2007, the entire contents of which are incorporated herein by reference.

### FIELD OF THE INVENTION

This invention relates to a video recorder, a video player and a method for managing video material which are used for a producing/editing system of video material for broadcast programs, for example.

### DESCRIPTION OF THE BACKGROUND

A professional-use video recorder used at a broadcasting station has used magnetic tape for record of an image as a recording medium conventionally. However, flash memory is coming to be used instead of magnetic tape by low-pricing of semiconductor recording medium. The flash memory is a rewritable nonvolatile semiconductor memory, and has an advantage of high-speed random access. Since the flash memory does not have a mechanical moving part unlike the magnetic tape or an optical disk drive, the flash memory excels in vibration-proof.

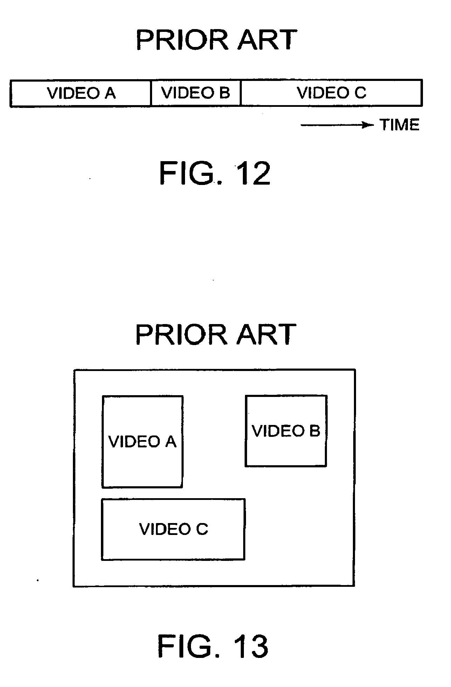

However, since the magnetic tape is recorded from a head of the magnetic tape, recording position in magnetic tape becomes recording order. Fig. 12 shows an image of the magnetic tape on which videos were recorded. If video A, video B and video C are recorded on the magnetic tape in order, the videos are recorded sequentially from the head of the magnetic tape. On the other hand, in the semiconductor recording medium, since record is performed to an empty area, there is no relation between the record position in the semiconductor recording medium and record order. Fig. 13 shows an image of the semiconductor recording medium in which video A, video B and video C were recorded in order. When replacing a conventional recorder which uses the magnetic tape with a recorder which uses the semiconductor recording medium, the recorded videos need to be played back in the recorded order like the magnetic tape from a viewpoint of the compatibility of operation.

As publicly known prior art to this invention, there are a Japanese patent application publication P2007-82029 and P2001-266548, for example.

Generally the recorder using the semiconductor recording medium has put a main aim on the random access, such as, choosing and playing back arbitrary videos. For this reason, the recorder using the semiconductor recording medium has low operation compatibility with the conventional recorder which the uses the magnetic tape, and it is inconvenient.

### SUMMRY OF THE INVENTION

This invention was made paying attention to the above-mentioned inconvenience, and the purpose of this invention is to provide a video recorder and a method for managing video material which can manage the recorded videos easily, maintaining compatibility with the recorder which uses magnetic tape.

According to the embodiment of this invention, an video recorder has a random access recording medium, an input interface which takes in an video data, an operation part which receives a specification of a group that video data belongs to, the video management section, a control part and an video playback part. The video management department relates records information which shows a specified group, and information which shows recording order of video data in the specified group related with the data in the recording medium as management information. The control part records an video data in the recording medium, reads out management information recorded in the recording medium and reads out video data in order of information which shows recording order of video data in the group of a playback object specified by the operation part.. The video playback part plays back video data read from the recording medium.

### BRIEF DESCRIPTION OF THE DRAWINGS

Fig. 1 is a general-view of a video recorder according to one embodiment of this invention.

Fig. 2 is a functional block diagram showing an internal structure of the video recorder shown in Fig. 1.

Fig. 3 is a figure showing an example of management information recorded in a memory pack according to the first embodiment.

Fig. 4 is a figure showing another example of the management information recorded in a memory pack according to the first embodiment.

Fig. 5 shows an image of the memory pack in which video data are classified and recorded in a plural groups according to a second embodiment.

Fig. 6 is a figure showing an example of the management information recorded in a memory pack according to the second embodiment.

Fig. 7 is a figure showing an example of management information recorded in a memory pack according to a third embodiment.

Fig. 8 is a figure showing an image of a memory pack in which recording capacities were assigned to every groups divided beforehand according to a fourth embodiment.

Fig. 9 is a figure showing an example of management information recorded in a memory pack according to a fifth embodiment.

Fig. 10 is a figure showing an example of operation to video data recorded in a memory pack according to a sixth embodiment.

Fig. 11 is a figure showing an example of management information in a memory pack updated by operation to video data according to a seventh embodiment.

Fig. 12 is a figure showing an image of magnetic tape on which videos are recorded.

Fig. 13 is a figure showing an image of semiconductor recording medium in which videos are recorded.

### DETAILED DESCRIPTION OF THE INVENTION

Hereinafter, embodiments of this invention are explained in detail with reference to the drawings.

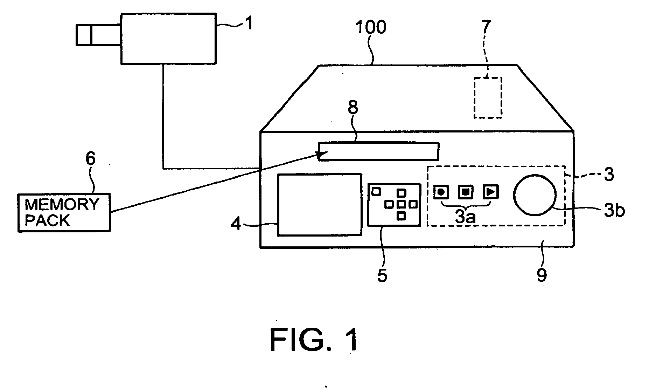

[First Embodiment] Fig. 1 is a general-view of a video recorder according to one embodiment of this invention. Camera 1 is connected to video recorder 100, and a video picturized with camera 1 is taken into video recorder 100. The taken-in video is recorded in memory pack 6 which is a removable medium inserted into insertion slot 8, or internal memory 7 built in a main part of video recorder 100. Memory pack 6 and internal memory 7 use a recording medium which includes a random access and nonvolatile semiconductor memory, for example, a flash memory.

Video operation part 3, display 4 and screen operation part 5 are formed in front panel 9 of video recorder 100. Video operation part 3 and screen operation part 5 are collectively called an operation part. Display 4 includes an LCD (Liquid Crystal Display), for example. Video recorder 100 can play back the recorded video data or can stop playback by various buttons (play, stop, etc.) 3a of video operation part 3, or operation of dial 3b. The played back video data is outputted to an external output interface (which is not shown and is usually installed in a connector on a back of the video recorder), and its contents can be displayed on a screen of a monitor display separately connected to this video recorder. In addition, camera 1 and video recorder 100 may be integrated.

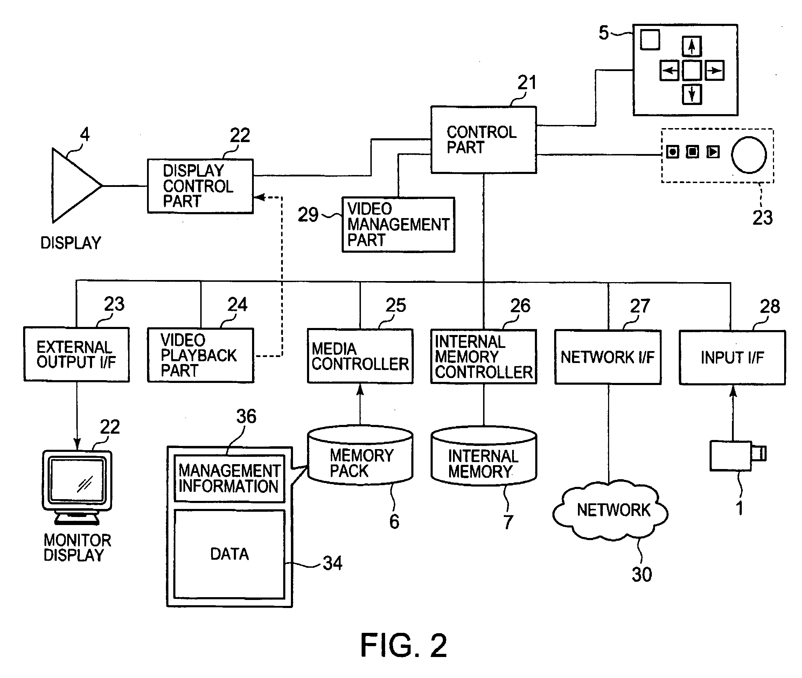

Fig. 2 is a functional block diagram showing an internal structure of video recorder 100. Control part 21 is a CPU (Central Processing Unit) which includes a microprocessor. Control part 21 takes in the video picturized with camera 1 via input interface 28, and records the video in memory pack 6 as video data via media controller 25. Or control part 21 records the taken-in video in internal memory 7 via internal memory controller 26. Furthermore control part 21 can send out the video data recorded in memory pack 6 or internal memory 7 to external network 30 via network interface 27.

Video playback part 24, display control part 22 and video management part 29 are control programs executed by control part 21. Video playback part 24 plays back the video data recorded in memory pack 6 or internal memory 7 under control of control part 21 according to directions received with video operation part 3. Display control part 22 outputs the played back video to display 4. Control part 21 outputs above-mentioned the played back video to monitor display 32 separately connected via external output interface 23. Video management part 29 records management information 36 for managing recorded video data 34 in memory pack 6 or internal memory 7 in which video data 34 was recorded. Details of the management information will be explained later.

Hereinafter, a method for managing videos in video recorder 100 constituted thus is explained. Since the method for managing the video in internal memory 7 is the same as that of memory pack 6, the method for managing the video of memory pack 6 is explained below.

An example in which the video data recorded in memory pack 6 are played back in recorded order is explained.

As shown in Fig. 13, since the semiconductor recording medium records the video data to empty area, there is no physical relationship between record order and record position.

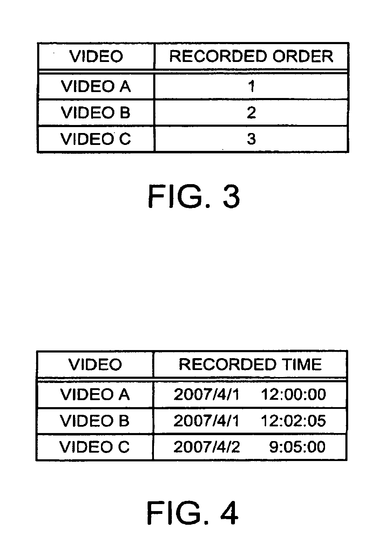

Then, when control part 21 records the video data in memory pack 6, the video management part 29 records the management information which lists the record order corresponding to each video in memory pack 6. An example of the management information recorded in memory pack 6 is shown in Fig. 3. Fig. 3 shows that the videos were recorded in order of video A, video B and video C. At the time of playback, control part 21 reads out the management information first, then reads out the video data according to the record order and video playback part 24 plays back the video data read out, and thereby the videos can be played back in order of recording. Furthermore, by recording the management information in memory pack 6, even if memory pack 6 is removed and is recorded with other video recorder etc., consistency of recording order can be maintained.

In addition, as shown in Fig. 4, the management information may include video recording time instead of the recording order as the information which shows the recording order. In this case, at the time of playback, control part 21 reads out the management information first, and reads out the video data in order of the time based on the video recording time. And video playback part 24 plays back the video data read out. Thereby, the videos can be played back in recording order. Furthermore, both the information of record order and recording time may be related to each video data and recorded.

Video recorder 100 can classify the video data into two or more groups, and record those in memory pack 6. An example which classifies and records the video data into the groups is explained below.

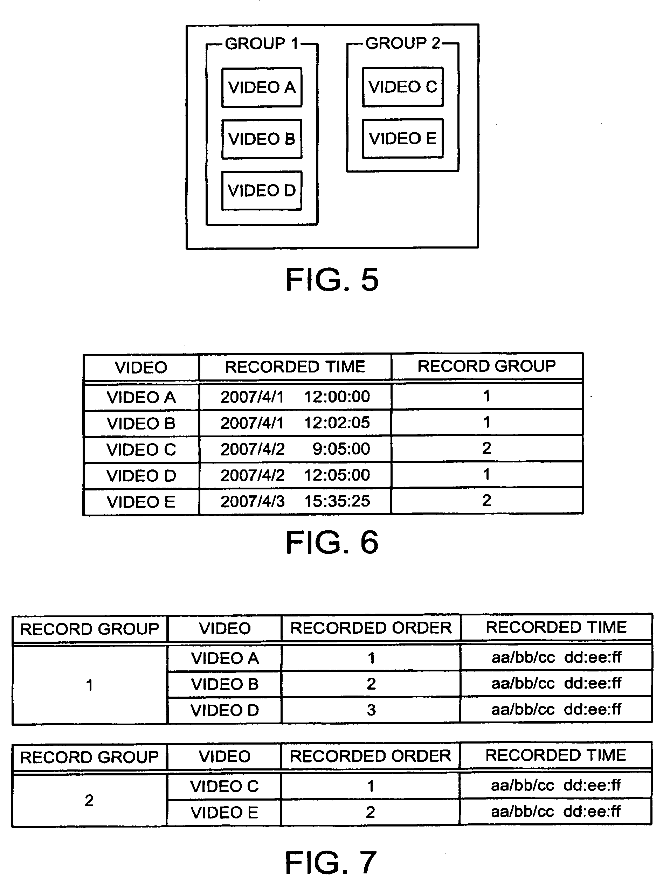

Fig. 5 show an image of memory pack 6 in which video data are classified and recorded in two or more groups. When the video data is recorded, video management part 29 relates information showing the recording group specified by the operator with each video data, and records the information in memory pack 6 as the management information. That is, preceding the recording of the video data, the group to which the video belongs is specified by operation of the operation part, that is, video operation part 3 and screen operation part 5 provided in front panel 9 of video recorder 100. Fig. 6 shows an example of the management information recorded in memory pack 6. A group number is recorded to each video with the recording time which is the information indicating the record order. And the video data of video A, video B and video D are recorded in recording group 1, and the video data of video C and video D are recorded in recording group 2. Thus, by dividing into groups, and storing and managing the video data, even if much video data are recorded in, for example, one semiconductor recording medium, there is an advantage of becoming easy to manage.

Next, it is explained a case that the recorded video data is played back from memory pack 6 which classified and recorded the video data into a plural groups. When memory pack 6 which recorded the video data is inserted in insertion slot 8 of video recorder 100, control part 21 reads out the management information from memory pack 6. Next, the group to which the video data of a playback object belongs is specified by video operation part 3 and screen operation part 5. Then, by pushing a play button of video operation part 3, the video data which belongs to the specified group are read out by control part 21 in recording order based on the management information, and the video data are played back by video playback part 24. Although the above-mentioned explanation is made about the video recorder which performs record and playback of video data, a part of the above-mentioned explanation is applicable also to the video player which performs only playback of video data.

Hereinafter, several video recorders which changed a method of the video management are explained. Except for the management method of the video data, the structure of the video recorder is the same structure as video recorder 100 shown in Fig. 1 and Fig. 2. Explanation on the structure is omitted and the management method of the video data is explained. Since the video data management method of internal memory 7 is the same as that of memory pack 6, the video data management method about memory pack 6 is explained.

[Second Embodiment] In the video recorder according to the second embodiment, the management information combines the management information shown in Fig. 3 and Fig. 6. The recorded video data can be played back in order of recording for each group divided in memory pack 6.

Fig. 7 shows an example of the management information which shows information in tabular form. The information which shows recording order and recording time, and the information which shows the group to which video data belongs are related with each video. Playback of the video data in order of recording for each group becomes possible by recording the management information in memory pack 6 in such a form by video management part 29. In a case of Fig. 7, even if the actual recording order is the order of video A, video B, video C, video D and video E, it means that videos are recorded in order of video A, video B and video D in group 1, and the videos are recorded in order of video C and video E in group 2.

Thereby, an operator can think that a plurality of imaginary magnetic tapes are contained in one semiconductor recording medium. If it compares to the conventional recorder using magnetic tape, it corresponds to that video A and video B were recorded on magnetic tape 1, magnetic tape 1 was exchanged with magnetic tape 2 and video C was recorded, and then magnetic tape 2 was changed to magnetic tape 1 again and video D was recorded, and magnetic tape 1 was changed to magnetic tape 2 again and video E was recorded. In this case, if recording group 1 is played back from a head, video A, video B and video D are played back in order. If recording group 2 is played back from a head, video C and video E are played back in order. This is equivalent to operation of using two magnetic tapes properly, using one semiconductor recording medium.

[Third Embodiment] In the video recorder according to the third embodiment, storage capacity is beforehand assigned for each divided group in memory pack 6.

In the first embodiment, recording is performed in order using the empty area of memory pack 6. For this reason, as shown in Fig. 5, even when only two video, video C and video E, are recorded in group 2, by continuing record to group 1, recording area of memory pack 6 is used up altogether and a new recording may become impossible in group 2.

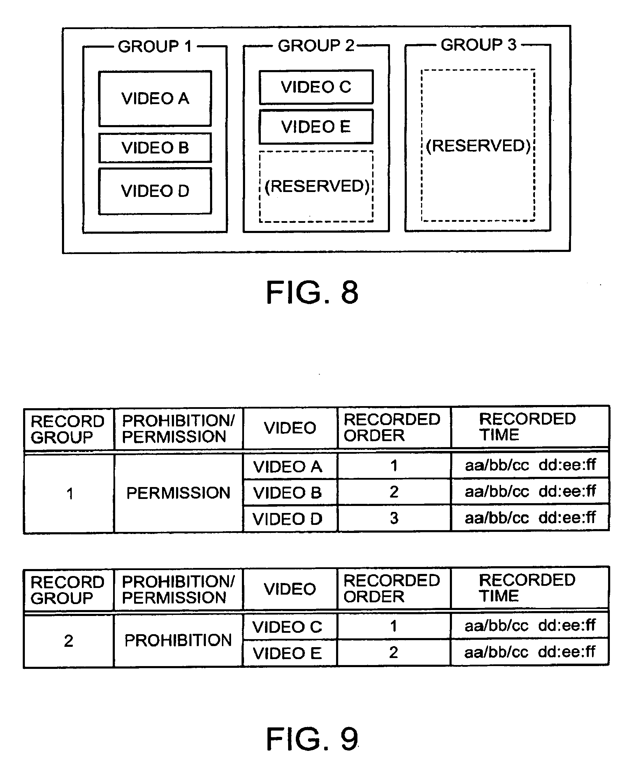

Then, video management part 29 records further information which shows storage capacity (or record time) beforehand assigned to each group as the management information in memory pack 6. Thereby, as shown in Fig. 8, the recordable area for each group is secured beforehand. In addition, Fig. 8 shows an example which assigned the same storage capacity (or the record time) as each group. Control part 21 controls media controller 25 so that recording more than the storage capacity (or the record time) assigned to each group based on this management information is not made. Group creation is performed by a group creation menu which is not illustrated. A new group is created by operation of video operation part 3 and screen operation part 5, and arbitrary storage capacity (or record time) is assigned to the new group.

In Fig. 8, group 1 was recorded with video A, video B and video D and all the storage capacity assigned beforehand has been used up. However group 2 and group 3 are still recordable. With this method, the imaginary magnetic tapes in memory pack 6 can have recordable time individually, and an operation nearer to an operation of the recorder using real magnetic tape is attained.

Further, when a recorded capacity (or recorded time) during recording of a video reaches the storage capacity (or the record time) assigned to the group, video management part 29 can also create a new group in the management information. And video data can be recorded in memory pack 6 via media controller 25 by control part 21 continuously. By doing in this way, the operation similar to the operation of the conventional recorder which used the magnetic tape becomes possible. That is, in the conventional recorder, if the magnetic tape under recording is used up, a continuation is recorded on a new magnetic tape.

[Fourth Embodiment] The video recorder according to the fourth embodiment can set up prohibition of record for each divided group in memory pack 6.

Fig. 9 shows the management information according to this embodiment. In addition to the management information shown in Fig. 7, the management information has permission/prohibition flag of recording for each the group. By recording such the management information in memory pack 6, recording can be prohibited for each the group. That is, control part 21 prohibits recording in the group in which the prohibition of record is specified based on the management information recorded in memory pack 6. Although control part 21 can not record a new video to recording group 2 on which the prohibition flag of recording was set up, control part 21 can record a new video to recording group 1 on which permission flag of recording is set up. Apart from this, each memory pack can also have the permission/prohibition flag of recording to whole the memory pack, i.e., whole the semiconductor recording medium.

[Fifth Embodiment] Next, the operation (deletion, movement, copy) to the video data recorded in memory pack 6 by the video recorder according to the fifth embodiment is explained.

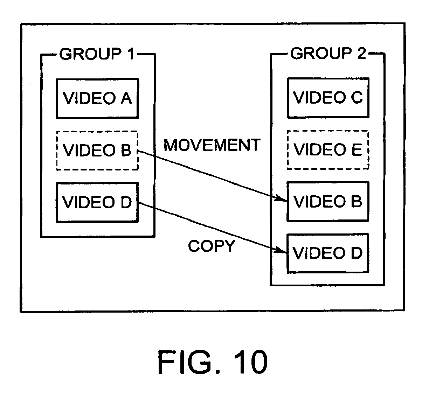

Fig. 10 shows deletion of the video data, movement between groups, and copy between groups in one memory pack 6. Fig. 10 shows a state where video E in group 2 has been deleted, and video B in group 1 has been moved to group 2, and video D in group 1 has been copied to group 2 from a state where video A, video B and video D were recorded in group 1, and video C and video E were recorded in group 2.

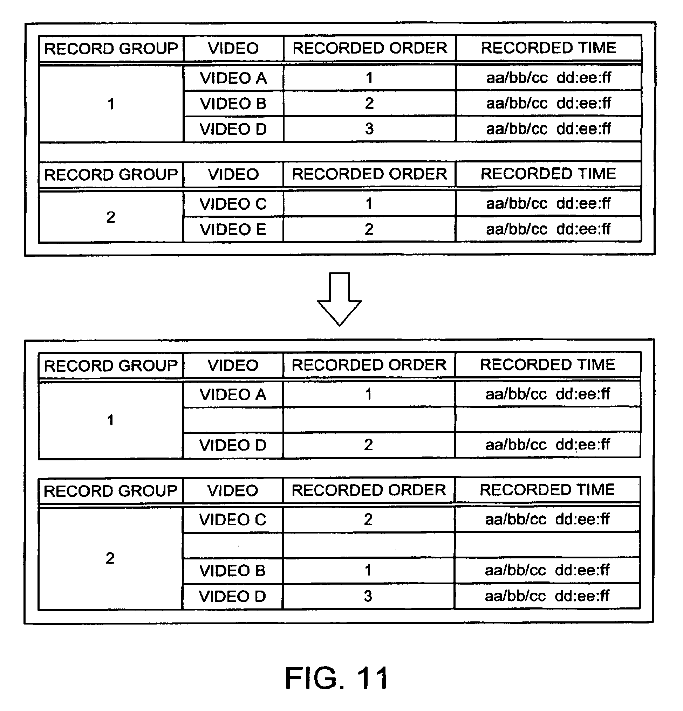

In the video recorder according to this embodiment, the recorded video data is managed by the management information recorded in memory pack 6 as shown in Fig. 11. Fig. 11 shows the state before the change and the state after the change, respectively. Those operations to the video data update only the management information, and it is unnecessary to deletion, copy or move the video data recorded actually. For example, in deleting video E in group 2, video management part 29 deletes information about video E in group 2 from the management information recorded in memory pack 6. In moving video B in group 1 to group 2, video management part 29 deletes information about video B in group 1 and adds the information about video B to group 2 in the management information recorded in memory pack 6. Furthermore, in copying video D in group 1 to group 2, video management part 29 adds information about video D in group 1 to group 2 in the management information recorded in memory pack 6. Specification of deletion, copy and movement of these video data is performed by video operation part 3 and screen operation part 5, for example, and the specification is received by the video management part.

The above-mentioned operation does not make a change of recording time, but recording order is determined again based on the information on recording time. However, when copy or movement is performed, recording time may be changed to the time when the copy or the movement is performed as a new video recording. Further the group of an erasing object can be specified and the information corresponding to all the videos belonging to the group can also be deleted from the management information recorded in memory pack 6.

According to above-mentioned embodiments, the video recorder records the information of recording time of the video data or record order in memory pack 6 while the video recorder records the video data in memory pack 6. Thereby, the video recorder can play back the videos in record order regardless of record position in memory pack 6. Furthermore, the videos recorded in each group can be played back in order of record by dividing the recorded videos into groups and managing them. That is, since according to the video recorders of the embodiments the recording medium can be treated as if two or more imaginary tapes existed in one recording medium, user-friendliness improves.

Therefore, according to the above embodiments, the video recorder which can manage the recorded video easily while maintaining the operability of the video recorder which uses magnetic tape as a recording medium is provided. Furthermore, by recording the management information in memory pack 6, since consistency of recording order or group management is maintained even when removing memory pack 6 and recording/playing back with other video recorders etc., improvement in producing program efficiency can be obtained.

Other embodiments or modifications of the present invention will be apparent to those skilled in the art from consideration of the specification and practice of the invention disclosed herein. It is intended that the specification and example embodiments be considered as exemplary only, with a true scope and spirit of the invention being indicated by the following.

## Claims

1. A video recorder, comprising:
a random access recording medium;
an input interface for taking in a video;
an operation part for receiving a specification of a group that video data belongs;
a video management part for recording information showing the group and information showing record order of the video data in the group related with the video in the recording medium as a managing information;
a control part configured to record the video data in the recording medium, to read out the management information recorded in the recording medium and to read out the video data belonging to the group specified to be played back in the record order based on the information showing the record order; and
a video playback part for playing back the video read out from the recording medium.

2. The video recorder according to claim 1, wherein the operation part receives storage capacity assigned to each the group,
the video management part records information showing the storage capacity assigned to each the group in the recording medium as the management information, and
the control part records the video data in the recording medium until recorded video data reaches the storage capacity assigned to the group based on the management information recorded on the recording medium.

3. The video recorder according to claim 2, wherein the video management part creates a new group when the recorded video data reaches the storage capacity assigned during recording the video data; and
the control part records the video data in the new group continuously.

4. The video recorder according to claim 1, wherein the video management part has information which specifies prohibition of record for each the group as the management information; and the control part prohibits recording in the group in which the prohibition of record was specified based on the management information recorded on the recording medium.

5. The video recorder according to claim 1, wherein the video management part receives a specification of deleting the recorded video data, and deletes the management information corresponding to the specified video data from the recording medium.

6. The video recorder according to claim 1, wherein the video management part receives specification of moving the video data recorded between groups, and changes the information which shows a group of the management information corresponding to said specified video data in the recording medium to a group of a movement destination.

7. The video recorder according to claim 1, wherein the video management part receives specification of copying the video data recorded, and copies the management information corresponding to the specified video data in the recording medium.

8. A method for managing video material, comprising:
taking in an video;
receiving specification of a group that a video data belonging;
relating information showing the group and information showing record order of the video data in the group with the video, and managing the information as management information;
recording the video data and the management information in a random access recording medium;
receiving specification of a group to be played back; and
playing back the video data belonging to the group specified base on the information showing the record order of the video data of the management information recorded in the recording medium in the record order.

9. A video recorder, comprising:
a random access recording medium;
an input interface for taking in a video;
a control part for recording the inputted video as a video data in the recording medium;
a operation part for receiving a specification of a group that the video data belonging; and
a video management part configured to generate management information including information showing a group to which the video belonging and information showing record order of the video data within the group, and to record the management information in said recording medium.

10. A video player, comprising:
an interface for connecting a random access recoding medium, the recoding medium being recorded with a plural video data and a management information including information showing a group to which the video data belonging and information showing record order of the video in the group;
an operation part for receiving a specification of a group that an video belonging to;
a control part configured to read out the management information from the recording medium and read out the video data in record order from the recoding medium based on the information showing record order of the video data belonging to the group received with the operation part; and
a playback part for playing back the video data read out by the control part.
